## Europäisches Patentamt
## European Patent Office
## Office européen des brevets

(19)

(11) Veröffentlichungsnummer : **0 066 095**
**B1**

(12) ## EUROPÄISCHE PATENTSCHRIFT

(45) Veröffentlichungstag der Patentschrift :
**11.12.85**

(51) Int. Cl.⁴ : **C 10 B 57/10**

(21) Anmeldenummer : **82103658.9**

(22) Anmeldetag : **29.04.82**

(54) **Verfahren zum Betrieb einer Kokereianlage.**

(30) Priorität : **29.05.81 DE 3121285**

(43) Veröffentlichungstag der Anmeldung :
**08.12.82 Patentblatt 82/49**

(45) Bekanntmachung des Hinweises auf die Patenterteilung : **11.12.85 Patentblatt 85/50**

(84) Benannte Vertragsstaaten :
**AT BE DE FR GB IT LU NL SE**

(56) Entgegenhaltungen :
**DE-A- 2 408 376**
**FR-A- 2 265 840**
**US-A- 3 793 743**

(73) Patentinhaber : **Krupp Koppers GmbH**
**Altendorfer Strasse 120**
**D-4300 Essen 1 (DE)**

(72) Erfinder : **Petrovic, Vladan, Dr. Dipl.-Ing.**
**Adelgundenweg 65**
**D-4300 Essen 1 (DE)**
Erfinder : **Rotthaus, Heinz**
**Auf dem Holleter 10**
**D-4300 Essen 1 (DE)**

EP 0 066 095 B1

**Beschreibung**

Die Erfindung betrifft ein Verfahren zum Betrieb einer Kokereianlage, bei dem die Koksöfen periodisch mit vorerhitzter Kohle beschickt werden und der erzeugte Koks einer Trockenkühlung mittels eines gasförmigen Kühlmediums unterworfen wird, wobei der bei der Kokstrockenkühlung erzeugte Abhitzedampf zur Kohlevorerhitzung genutzt wird.

Aus der US-A-3 793 743 ist ein Verfahren der genannten Art bekannt, bei dem das Kreislaufgas der Kokstrockenkühlung in einem Wärmetauscher (Abhitzekessel) zur Erzeugung von Wasserdampf genutzt wird, der mit einer Temperatur von unter 500 °C, insbesondere 25 °C, sowohl als Heizmedium als auch als Fließbettmedium für die Kohlevorerhitzung genutzt wird. Die Kohlevorerhitzung erfolgt dabei einstufig in einer Wirbelschicht, wobei durch Zugabe von CaO bzw. MgO-Pellets gleichzeitig eine Entschwefelung durchgeführt werden soll.

In der FR-A-2 265 840 wird ein Verfahren zur Kohletrocknung und -vorerhitzung beschrieben, bei dem die zu behandelnde Kohle zweistufig in zwei hintereinander geschalteten Flugstromtrocknern behandelt wird. Hierbei wird als Wärmeträger ein nicht näher definiertes Inergas verwendet, das im indirekten Wärmeaustausch mit dem Kühlgas einer Kokstrockenkühlanlage aufgeheizt wird. Das aufgeheizte Inertgas wird dabei zunächst mit einer Temperatur von 500 bis 600 °C in den Flugstromtrockner der zweiten Trocknungsstufe eingeleitet und erst im Anschluß daran in den Flugstromtrockner der ersten Trocknungsstufe, in dem das Inertgas von 300 bis 350 °C bis auf etwa 100 °C abgekühlt wird.

In der DE-A-24 08 376 wird schließlich ein dreistufiges Verfahren zur Kohlevorerhitzung beschrieben, bei dem als Wärmeträger heißes Rauchgas verwendet wird. Hierbei soll die Kohle von 15 °C bis auf 450 °C erwärmt werden, wobei die Wärmeträgertemperatur im ersten Erhitzer 700 °C, im zweiten Erhitzer 600 °C und im dritten Erhitzer 550 °C betragen soll.

Der Erfindung liegt die Aufgabe zu Grunde, das Verfahren der eingangs genannten Art weiter zu verbessern, wobei einerseits die bei der Kokstrockenkühlung frei werdende Wärme möglichst optimal genutzt und andererseits der Prozeß der Kohlevorerhitzung weiter verbessert und apparativ vereinfacht werden soll.

Das der Lösung dieser Aufgabe dienende Verfahren ist erfindungsgemäß dadurch gekennzeichnet, daß die Kohlevorerhitzung zweistufig in zwei hintereinander geschalteten Flugstromtrocknern durchgeführt wird, wobei der erste Flugstromtrockner ausschließlich mit auf auf eine Temperatur von 600 °C überhitztem Wasserdampf beheizt wird, während zur Beheizung des zweiten Flugstromtrockners Wasserdampf mit einer Temperatur zwischen 400 und 500 °C verwendet wird und wobei der zur Beheizung der Flugstromtrockner verwendete Wasserdampf nach Passieren derselben entstaubt sowie daran anschließend im Wärmeaustausch mit dem heißen Kreislaufgas der Kokstrockenkühlung wieder aufgeheizt wird.

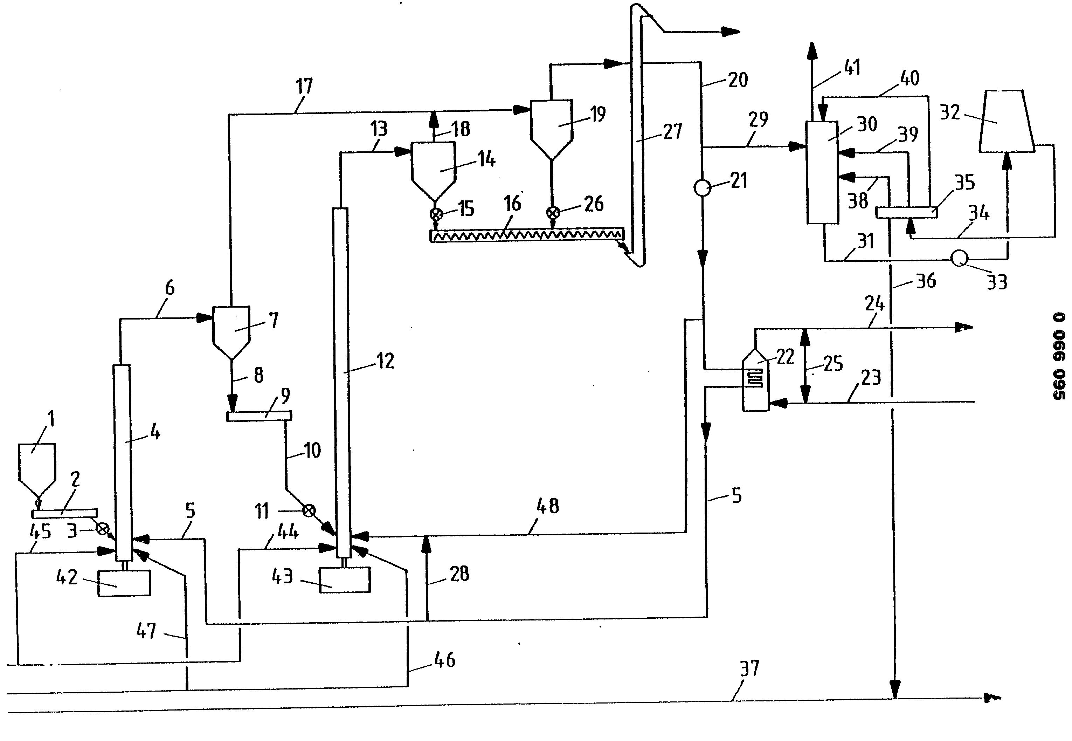

Weitere Ausgestaltungsmöglichkeiten und Einzelheiten des erfindungsgemäßen Verfahrens ergeben sich aus den vorliegenden Unteransprüchen sowie dem in der Abbildung dargestellten Fließschema, anhand dessen die Erfindung nachfolgend weiter erläutert werden soll und das gleichzeitig auch der Beschreibung eines Verfahrensbeispieles dient.

Das Fließ-Schema zeigt dabei selbstverständlich nur die für die Verfahrenserläuterung unbedingt erforderlichen Anlagenteile, während sonstige Nebeneinrichtungen sowie die Anlagenteile der eigentlichen Kokerei und der Kokstrockenkühlung nicht dargestellt sind.

Die vom Vorratsbunker 1 kommende feuchte Kohle, die einen Wassergehalt von ca. 9 Gew.-% aufweist, wird über die in einem Gehäuse untergebrachte Schwingförderrinne 2 und die Zellenradschleuse 3 zum ersten Flugstromtrockner 4 transportiert, in den sie am Fuße desselben eingeleitet wird. In der Höhe der Kohleaufgabe mündet auch die Leitung 5 in den Flugstromtrockner 4, durch die überhitzter Wasserdampf mit einer Temperatur von 600 °C in denselben eingeblasen wird. In diesem ersten Flugstromtrockner 4 wird die Kohle bis auf eine Temperatur von 70-90 °C, insbesondere 80 °C erhitzt und bis auf einen Wassergehalt von ca. 2 Gew.-% getrocknet. Die am Kopfe dieses Flugstromtrockners austretende Kohle gelangt sodann über die Leitung 6 in den Primärzyklon 7, in dem die gröberen Kohlebestandteile von den feinkörnigen Bestandteilen mit einer Korngrösse < 0,2 mm sowie den Brüden getrennt werden. Die gröberen Kohlebestandteile fliessen aus dem Primärzyklon 7 über die Leitung 8 ab und gelangen in die ebenfalls mit einem Gehäuse versehene Schwingförderrinne 9. Von dieser wird die Kohle über die Leitung 10 und die Zellenradschleuse 11 in den Unterteil des zweiten Flugstromtrockners 12 eingeleitet. In der Höhe der Kohleaufgabe mündet hier die Leitung 48, durch der erforderliche Wasserdampf mit einer Temperatur von ca. 500 °C in den Flugstromtrockner 12 eingeblasen wird. In diesem wird die Kohle bis auf eine Endtemperatur von ca. 200 °C erhitzt und bis auf eine Restfeuchte von 0 bis 0,1 Gew.-% H$_2$O getrocknet. Über die Leitung 13 gelangt die erhitzte und getrocknete Kohle sodann in den Zyklon 14, in dem wiederum die gröberen Kohlebetandteile von den feinkörnigen Bestandteilen und den Brüden getrennt werden. Die im Zyklon 14 abgeschiedene Kohle wird über die Zellenradschleuse 15 ausgetragen und auf den Trogschneckenförderer 16 aufgegeben. Die die feinkörnigen Kohlebestandteile mit einer Korngrösse von < 0,2 mm enthaltenden Brüden werden währenddessen über die Leitung 18 aus dem Zyklon 14 abgezogen und in die Leitung 17 eingeleitet, wo sie mit den vom Primärzyklon 7 kommenden feinkohlehaltigen Brüden vereinigt werden. Die Leitung 17 mündet in den Zyklon 19, in dem die Feinkohle aus den Brüden abgeschieden wird. Letztere werden mittels des Gebläses 21 über die Leitung 20 abgezogen und in den Dampfüberhitzer 22 eingeleitet, in dem die Wiederaufheizung auf ca. 600 °C erfolgt. Die Beheizung des Dampfüberhitzers 22 erfolgt dabei durch das Kreislaufgas der nicht dargestellten Kokstrockenkühlung, welches über die Leitung 23 in den Dampfüberhitzer 22 eingeleitet und über die Leitung 24 aus diesem abgezogen wird. Als Kreislaufgas der Kokstrockenkühlung wird im vorliegenden Falle Stickstoff verwendet. Zur Regulierung der Temperaturverhältnisse im Dampfüberhitzer 22 kann die Bypass-Leitung 25 vorgesehen sein, die die Leitungen 23 und 24 miteinander verbindet.

Die im Zyklon 19 abgeschiedene Feinkohle wird mittels der Zellenradschleuse 26 der auf dem Trogschneckenförderer 16 befindlichen Kohle zugegeben. Von dort wird die gesamte vorerhitzte Kohle mit einer Temperatur von ca. 200 °C mittels eines geschlossenen Kettenförderers 27 zum nicht dargestellten Kohlenturm der Kokerei gefördert. Der Trogschnekkenförderer 16 und der Kettenförderer 27 werden elektrisch beheizt, um Wärmeverluste beim Transport der vorerhitzten Kohle zu vermeiden.

Der im Dampfüberhitzer 22 auf ca. 600 °C überhitzte Wasserdampf wird über die Leitung 5 abgezogen, die in den ersten Flugstromtrockner 4 mündet. Da die Kohle bereits im ersten Flugstromtrockner 4 sehr weitgehend getrocknet wird ist der zweite Flugstromtrockner 12 im wesentlichen nur noch für die weitere Erhitzung der Kohle bis auf die Endtemperatur von ca. 200 °C sowie die Entfernung der restlichen Feuchtigkeit aus der Kohle erforderlich. Sein Wärmebedarf ist deshalb nicht so gross wie der des ersten Flugstromtrockners 4. Es genügt deshalb, wenn der zur Beheizung des Flugstromtrockners 12 verwendete Wasserdampf nur eine Temperatur von 400-500 °C aufweist. Von der zum Dampfüberhitzer 22 führenden Leitung 20 zweigt deshalb die Leitung 48 ab, die unmittelbar in den Unterteil des Flugstromtrockners 12 mündet, und durch die ein Teil der Brüden abgezogen werden kann. Diese Brüden weisen eine Temperatur von ca. 200 °C auf. Damit jedoch die gewünschte Wasserdampftemperatur von 400-500 °C im Flugstromtrockner 12 erreicht werden kann, wird über die von der Leitung 5 kommende Leitung 28 auf ca. 600 °C überhitzter Wasserdampf den Brüden in der Leitung 48 im erforderlichen Umfange zugemischt.

Da die Brüden in der Leitung 20 den beim Trocknen der feuchten Kohle abgeschiedenen Wasserdampf enthalten, muss eine Teilkondensation der Brüden erfolgen. Zu diesem Zweck zweigt vor dem Gebläse 21 die Leitung 29 ab, durch die ein Teilstrom der Brüden abgezogen und in den Kreislaufwascher 30 eingeleitet wird, in dem neben einer Kondensation gleichzeitig die Auswaschung von Verunreinigungen erfolgt. Die aus dem Kreislaufwascher 30 ablaufende Flüssigkeit wird über die Leitung 31 und die Pumpe 33 auf den Kühlturm 32 aufgegeben, in dem eine Abkühlung bis auf ca. 40 °C erfolgt. Die gekühlte Flüssigkeit wird sodann über die Leitung 34 in den Kühlwasserverteiler 35 eingeleitet. Von hier wird das erforderliche Kreislaufwasser über die Leitungen 38, 39 und 40 in verschiedenen Höhen wieder auf den Kreislaufwascher 30 aufgegeben. Überschüssiges Wasser wird dagegen über die Leitung 36 abgezogen und in den Abwasserkanal 37 eingeleitet. Gegebenenfalls kann auch in der vom Kreislaufwascher 30 zum Kühlturm 32 führenden Leitung 31 eine im Fliess-Schema nicht dargestellte Abwasserbehandlungseinrichtung vorgesehen sein. Die aus dem Abwasser abgeschiedenen Feststoffe, die einen hohen Feinkohleanteil aufweisen, können entweder auf einer Deponie abgelagert oder verbrannt werden.

Über die Leitung 41 werden die aus dem Kreislaufwascher 30 entweichenden Gase abgeleitet, die entweder in den nicht dargestellten Kamin oder eine ebenfalls nicht dargestellte Gasbehandlungsstufe gelangen können. Gegebenenfalls kann die vorstehend beschriebene Schaltung dadurch vereinfacht werden, dass anstelle des Kreislaufwaschers 30 ein Venturiwascher eingesetzt wird, in dem die Teilkondensation der Brüden erfolgt.

Am Fusse der Flugstromtrockner 4 und 12 befinden sich die Wassertassen 42 und 43. Über die Leitungen 44 und 45 kann Inertgas und über die Leitungen 46 und 47 kann Frischwasser in die Flugstromtrockner 4 und 12 eingeblasen werden.

## Patentansprüche

1. Verfahren zum Betrieb einer Kokereianlage, bei dem die Koksöfen periodisch mit vorerhitzter Kohle beschickt werden und der erzeugte Koks einer Trockenkühlung mittels eines gasförmigen Kühlmediums unterworfen wird, wobei der bei der Kokstrockenkühlung erzeugte Abhitzedampf zur Kohlevorerhitzung genutzt wird, dadurch gekennzeichnet, daß die Kohlevorerhitzung zweistufig in zwei hintereinander geschalteten Flugstromtrocknern durchgeführt wird, wobei der erste Flugstromtrockner ausschließlich mit auf eine Temperatur von 600 °C überhitztem Wasserdampf beheizt wird, während zur Beheizung des zweiten Flugstromtrockners Wasserdampf mit einer Temperatur zwischen 400 und 500 °C verwendet wird und wobei der zur Beheizung der Flugstromtrockner verwendete Wasserdampf nach Passieren derselben entstaubt sowie daran anschließend im Wärmeaustausch mit dem heißen Kreislaufgas der Kokstrockenkühlung wieder aufgeheizt wird.

2. Verfahren nach Anspruch 1, dadurch gekennzeichnet, dass die Kohle im ersten Flugstromtrockner bis auf eine Temperatur von 70 bis 90 °C erhitzt und bis auf einen Wassergehalt von 2 Gew.-% getrocknet und im zweiten Flugstromtrockner bis auf die Endtemperatur von 200 °C erhitzt und bis auf einen Restwassergehalt von 0 bis 0,1 Gew.-% getrocknet wird.

3. Verfahren nach den Ansprüchen 1 und 2, dadurch gekennzeichnet, daß zur Temperatureinstellung des der Beheizung des zweiten Flugstromtrockners dienenden Wasserdampfes auf 400-500 °C ein Teilstrom des auf eine Temperatur von 600 °C überhitzten Wasserdampfes mit einem Teilstrom der bei der Kohletrocknung anfallenden Brüden gemischt wird.

4. Verfahren nach den Ansprüchen 1 bis 3, dadurch gekennzeichnet, dass aus den bei der Kohletrocknung anfallenden Brüden überschüssiger Wasserdampf durch Teilkondensation entfernt wird.

## Claims

1. Process for operating a coking plant, in which the coke ovens are periodically fed with preheated coal and the coke produced is subjected to dry cooling by means of a gaseous cooling medium, the waste-heat steam generated during dry-cooling of the coke being utilised for preheating of the coal, characterised in that the preheating of the coal is carried out in two stages in two pneumatic dryers connected in series, in that the first pneumatic dryer is heated exclusively with steam superheated to a temperature of 600 °C, whilst for the heating of the second pneumatic dryer steam with a temperature between 400 and 500 °C is used and in that the steam used for heating the pneumatic dryers, after passing through these, has dust removed from it and is subsequently reheated by heat exchange with the hot circulating gas of the coke dry-cooling system.

2. Process according to Claim 1, characterised in that the coal is heated in the first pneumatic dryer to a temperature of 70 to 90 °C and dried to a water content of 2 % by weight and in the second pneumatic dryer is heated to the final temperature of 200 °C and dried to a residual water content of 0 to 0,1 % by weight.

3. Process according to Claims 1 and 2, characterised in that the temperature of the steam used for heating the second pneumatic dryer is adjusted to 400-500 °C by mixing a part flow of the steam superheated to a temperature of 600 °C with a part flow of the steam generated in drying of the coal.

4. Process according to Claims 1 to 3, characterised in that the excess steam is removed by partial condensation from the steam generated in drying of the coal.

## Revendications

1. Procédé pour l'exploitation d'une installation de cokéfaction, dans lequel les fours à coke sont périodiquement chargés de charbon préchauffé et le coke produit soumis à un refroidissement à sec au moyen d'un fluide de refroidissement gazeux, tandis que la vapeur de chaleur perdue, engendrée lors du refroidissement à sec du coke, est utilisée pour le préchauffage du charbon, caractérisé par le fait que le préchauffage a lieu en deux phases dans deux séchoirs à flux volant montés l'un derrière l'autre, tandis que le premier séchoir à flux volant est chauffé exclusivement avec une vapeur surchauffée à une température de 600 °C, tandis que pour chauffer le second séchoir à flux volant, on utilise la vapeur d'eau à une température comprise entre 400 et 500 °C et que la vapeur d'eau utilisée pour le chauffage des séchoirs à flux volant est, après son passage dans ces derniers, dépoussiérée, puis réchauffée ensuite à nouveau par échange thermique avec le gaz de recyclage chaud du refroidissement à sec du coke.

2. Procédé selon la revendication 1, caractérisé par le fait que le charbon est chauffé dans le premier séchoir à flux volant jusqu'à une température de 70 à 90 °C et séché jusqu'à une teneur en eau de 2 % en poids et qu'il est chauffé dans le second séchoir à flux volant jusqu'à la température finale de 200 °C et séché jusqu'à une teneur résiduelle en eau de zéro à 0,1 % en poids.

3. Procédé selon les revendications 1 et 2, caractérisé par le fait que pour ajuster à 400-500 °C la température de la vapeur d'eau servant au chauffage du second séchoir à flux volant, un courant partiel de la vapeur d'eau surchauffée à 600 °C est mélangé à un courant partiel des buées se formant au cours du séchage du charbon.

4. Procédé selon les revendications 1 à 3, caractérisé par le fait que de la vapeur d'eau en excès est éliminée par condensation partielle des buées se formant au cours du séchage du charbon.

0 066 095